# DEMANDE DE BREVET EUROPEEN

(11) **EP 2 875 733 A1**
(43) Date de publication de la demande: **27.05.2015**
(21) Numéro de dépôt: 13306606.8
(22) Date de dépôt: 25.11.2013
(51) Int. Cl.: A23G 3/34, A23G 3/48

(54) **Produit alimentaire sucré à base de fruit sec**

(71) Demandeur: Sonafi, 78220 Viroflay (FR)
(72) Inventeur: Menegoz, Mathias, 26800 Etoile sur Rhône (FR); Charve, Sébastien, 26120 Chabeuil (FR)
(74) Mandataire: Bernstein, Claire Jacqueline

(57) **Abrégé**

La présente invention se rapporte à un produit alimentaire sucré à base de fruit sec présentant les mêmes propriétés physico-chimiques que le chocolat et comprenant : entre 25 et 45% en poids de fruit sec représentant un apport total en matière grasse représentant au plus 25% en poids par rapport au poids total dudit produit alimentaire ; entre 25 et 45% en poids de saccharose ou autre matière sucrante telle que le maltitol ; entre 20 et 40% en poids de beurre de cacao ou toute autre matière grasse végétale utilisée en substitution partielle ou totale du beurre de cacao ; optionnellement, un émulsifiant en une teneur inférieure ou égale à 1% ; ledit produit alimentaire sucré ayant une granulométrie inférieure ou égale à 50 µm et son procédé de préparation.

## Description

La présente invention se rapporte au domaine de l'industrie alimentaire et plus particulièrement à celui de la confiserie. Elle vise plus spécifiquement un nouveau produit alimentaire à base de fruits secs ayant des propriétés organoleptiques et rhéologiques particulières.

Son objectif est de proposer un nouveau produit alimentaire qui pourrait, d'un point de vue technique, se substituer au chocolat et permettrait ainsi de décliner des gammes de confiserie avec des goûts différents de celui du chocolat. La Demanderesse s'est plus particulièrement intéressée à la mise au point d'un produit alimentaire à base de fruits secs qui aurait les propriétés physiques, en particulier rhéologiques, du chocolat.

On désigne par fruits secs aussi bien les fruits séchés que les graines et les fruits secs incluant notamment les fruits à coque.

Il existe divers produits alimentaires sucrés comprenant des fruits secs, on peut notamment citer les pâtes à tartiner mélangeant poudre (et/ou fève) de cacao et noisettes, le gianduja, le praliné qui est un mélange de sucre et de fruits secs (à hauteur de 50% minimum) ou encore de fourrage praliné (produit constitué de praliné tel que défini ci-dessus, et d'autres ingrédients) ; ces produits ne répondent toutefois pas aux exigences de la Demanderesse pour différentes raisons : leur goût n'est pas uniquement celui du fruit sec, en outre, leur texture, trop molle ou trop friable, ne permet les applications envisagées par la Demanderesse.

Dans le cas présent, la texture recherchée est celle du chocolat au lait ou du chocolat noir, c'est-à-dire un produit solide et croquant à température ambiante mais qui devient fluide lorsqu'il est chauffé, ce qui permet, entre autres, de l'utiliser pour l'enrobage de confiseries, pour la préparation de confiseries moulées ou encore pour des applications de type pâtisserie (crémeux, ganache, mousse...).

La Demanderesse a rencontré diverses difficultés au cours de la mise au point de ce produit car la texture recherchée n'était obtenue qu'avec l'ajout d'additifs ayant pour conséquence l'altération du goût de fruit sec. La Demanderesse est finalement parvenue à la mise au point d'un produit présentant un goût prononcé de fruit sec et ayant une texture identique à celle du chocolat en contrôlant la teneur en matière grasse des fruits secs utilisés.

Ainsi la présente invention se rapporte à un produit alimentaire sucré à base de fruit sec comprenant :
- entre 25 et 45% en poids de fruit sec représentant un apport total en matière grasse représentant au plus 25%, de préférence 20%, encore préférentiellement 15%, en poids par rapport au poids total dudit produit alimentaire ; de préférence, ledit fruit sec a une teneur en matière grasse inférieure ou égale à 65%, de préférence 40%, encore préférentiellement 35%, en poids par rapport au poids total de fruit sec ;
- entre 25 et 45% en poids de saccharose ou autre matière sucrante telle que le maltitol ;
- entre 20 et 40% en poids de beurre de cacao ou toute autre matière grasse végétale utilisée en substitution partielle ou totale du beurre de cacao, par exemple, du beurre d'illipé ou de karité ;
- optionnellement, un émulsifiant en une teneur inférieure ou égale à 1%, de préférence 0,5%, en poids ; l'homme du métier saura choisir l'émulsifiant alimentaire le plus adapté aux matières premières utilisées ; il peut s'agir par exemple de lécithine, de polyricinoléate de polyglycérol E476, de mono et/ou di-glycérides d'acides gras E471,... de préférence, l'émulsifiant est de la lécithine.

Ledit produit alimentaire sucré ayant une granulométrie inférieure ou égale à 50 µm, de préférence entre 15 et 25 µm.

Sauf indication contraire, les teneurs qui précèdent sont exprimées en poids par rapport au poids total du produit alimentaire sucré à base de fruits sec.

On entend par fruit sec tout fruit frais séché, graine ou fruit à coques, notamment amande, noisette, noix, noix de cajou, noix de pécan, pignon de pin, pistache, sésame, graines de courge, graines de tournesol, pavot, noix du Brésil, noix de Macadamia, noix du Queensland, noix de Nangail, châtaigne, ou encore des cacahouètes..., seul ou en mélange ; de préférence, il s'agit de fruits secs à coque, en particulier, noisette ou amande. L'homme du métier saura ajuster la teneur en matière grasse du fruit sec considéré afin de se conformer aux spécificités du produit fini.

Lorsque le fruit sec est un fruit frais séché, il peut être obtenu par toute méthode permettant une diminution de sa teneur en eau et il est tel qu'il contient une teneur maximale d'eau de 7% en poids ; de préférence, les fruits frais séchés sont obtenus à partir d'abricot, mangue, fruits de la passion, framboise, fraise, citron, orange, noix de coco, ananas, banane, kiwi, litchi, pêche, pomme, poire...

La préparation du produit selon l'invention peut être réalisée selon les techniques classiques mises en oeuvre lors de la préparation de produits chocolatés ; il est donc à la portée de l'homme du métier, sur la base de ses connaissances générales, de fabriquer le produit selon l'invention. C'est d'ailleurs un avantage significatif du produit selon l'invention de pouvoir être préparé à l'échelle industrielle en employant les machines de lignes de production de chocolat.

Le produit selon l'invention peut, par exemple, être préparé selon un procédé de fabrication comprenant les étapes suivantes :
a) mélange et pétrissage des ingrédients (sucre ou autre matière sucrante, fruit sec, beurre de cacao ou substitut de beurre de cacao et émulsifiant) ;
b) broyage du mélange d'ingrédients ; cette étape conduit à la granulométrie du produit fini souhaitée ;
c) mélange à une température supérieure ou égale à 40°C a minima pendant 2 heures ;
d) optionnellement, tempérage ; cette étape est recommandée lorsque la matière grasse utilisée est majoritairement composée de beurre de cacao ; il s'agit d'une étape au cours de laquelle le refroidissement du produit est initié afin que la matière grasse cristallise sous une forme stable. L'objectif est d'obtenir un produit fini qui présente les meilleures caractéristiques dans le temps (stabilité).

Les étapes de broyage b) et de mélange avec chauffage c) peuvent être réalisées successivement ; dans ce cas, le broyage b) précède le mélange avec chauffage c). Cette étape c) peut alors être réalisée pendant une durée plus courte, par exemple comprise entre 5 et 10 heures ; alternativement et en fonction du procédé retenu, ces deux étapes peuvent être conduites simultanément.

Après sa fabrication, le produit est généralement moulé.

La fabrication du produit selon l'invention peut être réalisée avec des fruits secs entiers ou préalablement broyés.

Lorsque le broyage et le mélange avec chauffage c) sont réalisés successivement, il est recommandé, pour l'obtention d'un produit fini ayant les propriétés rhéologiques souhaitées, d'utiliser comme ingrédient de départ un fruit sec sous forme de poudre d'une granulométrie fine, c'est-à-dire une poudre ayant une granulométrie inférieure à 315 µm pour 90% de la masse en début de procédé de fabrication.

L'étape de broyage mise en oeuvre au cours du procédé de fabrication a pour conséquence de diminuer significativement cette granulométrie afin d'obtenir un produit fini ayant une granulométrie inférieure ou égale à 50 µm, de préférence comprise entre 15 et 25 µm.

Comme indiqué précédemment, le produit selon l'invention possède des propriétés physiques très proches de celles du chocolat ; ces propriétés se caractérisent par une plage de températures de fusion de la matière grasse comprise entre 20 et 40°C et sont telles qu'il est totalement fondu à 40°C ; par une fluidité (viscosité et limite d'écoulement) tout à fait comparable à celle du chocolat noir ou du chocolat au lait de couverture ; et par un produit solide à température ambiante (18-25°C).

Ces propriétés sont telles que le produit est croquant puis fondant en bouche ; il a un goût intense de fruit sec.

Le produit selon l'invention présente l'avantage de pouvoir être utilisé dans toutes les applications classiques du chocolat ; en particulier, le produit selon l'invention peut être utilisé comme couche d'enrobage de confiserie ou encore mis en forme par moulage. Bien qu'il représente une alternative à l'utilisation du chocolat, il ne nécessite pas l'investissement de matériels particuliers, notamment de lignes de fabrication industrielles, puisque ceux existant pour le chocolat conviennent.

Le produit alimentaire, selon l'invention, peut être utilisé pour des applications de type chocolatières, pâtissières, en biscuiterie ou encore en glacerie :
Parmi les applications chocolatières, on peut citer :
   - l'enrobage de bonbons ou de bouchées ;
   - la réalisation de moulages de type moulage de Pâques (Poule, OEuf, ...) ou autre moulage (Cabosses, petits personnages, ...) ;
   - la réalisation d'intérieurs de bonbons de chocolat de type ganache cadrée et chablonnée ;
   - le moulage de tablettes, de carrés ou toute autre forme moulable.
Parmi les applications pâtissières, on peut citer la préparation de :
- crémeux ;
- ganaches montées ;
- mousses ;
- sauce ;
- nappage ;
- décors ;
- ganache pâtissière ;
- boisson ;
   et parmi les applications en glacerie, on peut citer la préparation de :
- glaces ;
- sorbets ;
- crèmes glacées.

### Exemple 1 - préparation d'un produit alimentaire selon l'invention

Cet exemple vise à décrire la préparation d'un produit selon l'invention.
La recette mise en oeuvre est une recette formulée à partir des 3 ingrédients suivants :
→ Sucre blanc cristallisé
→ Poudre d'amandes
→ Beurre de cacao désodorisé
La mise en oeuvre de chacun des ingrédients se fait dans les proportions suivantes :

| Ingrédient | % en poids par rapport au poids total |
|---|---|
| Poudre d'amande | 26% |
| Sucre blanc | 40% |
| Beurre de cacao désodorisé | 34% |

La mise en oeuvre se fait, dans cet exemple, sur une ligne de fabrication de chocolat conventionnelle de type pétrissage/PrébroyageBroyage/Mélange.
Les étapes clés de la préparation de ce produit sont présentées ci-dessous :

| |
|---|
| Mélange des MP / Pétrissage |
| Pré-broyage / Broyage |
| Mélange |
| Tempérage |
| Moulage |
| Conditionnement |

Pour être moulé, on opère sur le produit un tempérage conduit aux températures suivantes :
T° de cuve : 50°C
T° basse : 26°C
T° de sortie : 28°C

### Exemple 2 - caractérisation rhéologique d'un produit alimentaire selon l'invention

Ce second exemple vise à décrire le procédé de caractérisation de la rhéologie sur un produit issu de l'invention, qui sera, dans ce cas précis, un produit formulé à base de noisettes entières et qui présente la formule suivante et préparé selon le procédé décrit à l'exemple 1 :

### Formulation du produit :

| | % de chaque ingrédient |
|---|---|
| Noisettes entières | 27% |
| Sucre blanc | 39% |
| Beurre de cacao désodorisé | 34% |

### Principe :

Le comportement rhéologique est suivi grâce à un rhéomètre rotatif ROTOVISCO 1 à vitesse imposée.

### Matériel :

Instrument de mesure ROTOVISCO RV1 de chez Thermo Fischer;
Bain thermostaté à 40°C ;
Logiciel d'application et de traitement des mesures RHEOWIN - Modèle CASSON ; Systèmes de géométries coaxiaux DIN Z 20 (rotor)

### Résultants :

Limite d'écoulement : 12 Pa +/- 1
Viscosité : 2 Pa.s +/- 0.2
Ces valeurs correspondent aux propriétés rhéologiques de chocolats de couverture ; les résultats de l'exemple 2 montrent ainsi que le produit selon l'invention présente des propriétés physiques d'écoulement identiques à celle du chocolat.

## Revendications

1. Produit alimentaire sucré à base de fruit sec comprenant :
- entre 25 et 45% en poids de fruit sec représentant un apport total en matière grasse représentant au plus 25% en poids par rapport au poids total dudit produit alimentaire ;
- entre 25 et 45% en poids de saccharose ou autre matière sucrante telle que le maltitol ;
- entre 20 et 40% en poids de beurre de cacao ou toute autre matière grasse végétale utilisée en substitution partielle ou totale du beurre de cacao ;
- optionnellement, un émulsifiant en une teneur inférieure ou égale à 1% ;
ledit produit alimentaire sucré ayant une granulométrie inférieure ou égale à 50 µm.

2. Produit alimentaire selon la revendication 1, **caractérisé en ce que** le fruit sec est choisi parmi les fruits frais séchés, les graines ou les fruits à coques.

3. Produit alimentaire selon la revendication 2, **caractérisé en ce que** le fruit sec est choisi parmi l'amande, la noisette, la noix, la noix de cajou, la noix de pécan, le pignon de pin, la pistache, le sésame, les graines de courge, les graines de tournesol, le pavot, la noix du Brésil, la noix de Macadamia, la noix du Queensland, la noix de Nangail, la châtaigne, ou la cacahouète, seul ou en mélange.

4. Produit alimentaire selon la revendication 2, **caractérisé en ce que** le fruit sec est un fruit frais séché ayant une teneur maximale d'eau de 7% en poids et choisi parmi abricot, mangue, fruits de la passion, framboise, fraise, citron, orange, noix de coco, ananas, banane, kiwi, litchi, pêche, pomme, poire.

5. Produit alimentaire selon l'une quelconque des revendications précédentes, **caractérisé par** une granulométrie comprise entre 15 et 25 µm.

6. Produit alimentaire selon l'une quelconque des revendications précédentes, **caractérisé en ce que** ledit fruit sec a une teneur en matière grasse inférieure ou égale à 65%.

7. Produit alimentaire selon l'une quelconque des revendications précédentes, **caractérisé en ce que** ledit émulsifiant est de la lécithine.

8. Procédé de fabrication du produit selon l'une quelconque des revendications 1 à 5 comprenant les étapes suivantes :
a) mélange et pétrissage dudit sucre ou autre matière sucrante, dudit fruit sec, dudit beurre de cacao ou substitut de beurre de cacao et dudit émulsifiant ;
b) broyage dudit mélange obtenu à l'étape a) ;
c) mélange à une température supérieure ou égale à 40°C pendant au moins 2 heures ;
d) optionnellement, tempérage.

9. Procédé selon la revendication 8, **caractérisé en ce que** les étapes b) de broyage et c) de mélange avec chauffage sont réalisées simultanément.
